# EUROPEAN PATENT SPECIFICATION

(11) **EP 1 566 498 B1**
(45) Date of publication and mention of the grant of the patent: **17.05.2006**
(21) Application number: 04100377.3
(22) Date of filing: 06.02.2004
(51) Int. Cl.: E03F 5/22

(54) **Method of pumping wastewater, and wastewater pump**
Verfahren zum Heben von Abwasser und Abwasserpumpe
Procédé du refoulement d'eau d'égout et pompe à eau d'égout

(43) Date of publication of application: 24.08.2005
(73) Proprietor: Uponor Innovation AB, 513 81 Fristad (SE)
(72) Inventor: Tast, Niila, 15270, Kukkila (FI)
(74) Representative: Huhtanen, Ossi Jaakko

(56) References cited:
- EP-A- 0 968 965
- DE-B- 1 038 996
- DE-U- 20 105 661
- FR-A- 882 689
- US-A- 3 078 809

## Description

### BACKGROUND OF THE INVENTION

The invention relates to a method of pumping wastewater, the method comprising pumping wastewater from a tank with an airlift pump by leading air to a lower portion of an upward-leading pipe portion of the airlift pump.

The invention further relates to a wastewater pump, which is an airlift pump comprising an upward-leading pipe portion, a downward-leading pipe portion, and means for feeding air to a lower portion of the upward-leading pipe portion for achieving discharge pumping, the airlift pump being intended to be arranged to pump liquid from a tank.

For example, in small-scale wastewater purifying plants, it is known to pump purified wastewater to a discharge site with an airlift pump, i.e. a so-called mammoth pump.

The operation of the airlift pump is based on leading air to the lower portion of a pipe in liquid. The air is mixed with the liquid, and being lighter, this mixture of liquid and air tends to rise upwards in the pipe, and, correspondingly, the liquid surrounding the pipe presses new liquid into the pipe. The airlift pump does not comprise moving or electric parts, and, because of its reliability of operation, is therefore advantageous as regards its operational costs and its minimal need for service. In connection with a wastewater tank, the airlift pump typically includes a U-shaped pipe provided with a downward-oriented pipe portion and an upward-oriented pipe portion. Pressurized air is fed to the lower portion of the upward-oriented pipe portion. Between pumpings, for example during aeration of the wastewater tank and after the aeration, impurities get to gather into the pipe of the wastewater pump. Impurities tend to gather particularly at the lower portion of the U-shaped portion of the pipe of the airlift pump. When the tank is being emptied, these impurities are pumped from the tank, along with the first purified wastewaters to a discharge site, i.e. impurities get to exit the purifying plant.

EP publication 0 968 965 discloses a wastewater purifying plant, wherein the purified wastewater is discharged by means of an airlift pump. The airlift pump comprises an upward-leading pipe portion at the front end of a downward-leading pipe portion, enabling the prevention of gravitational falling of impurities to the lowest curve of the airlift pump. The publication further discloses a solution wherein gas is fed to an upper curve of the front end of a pump of an airlift pipe at the same time as gas is led to the lower portion of a tank, said gas feed being intended to prevent the flow of impurities into the pipe of the airlift pump. Such a solution is quite complex and is unable to completely prevent the entry of impurities into the airlift pump and from there out of the wastewater tank.

DE publication 20 105 661 discloses a small-scale purifying plant comprising an airlift pump having a first upward-leading pipe portion, then a second, downward-leading pipe portion, followed by an upward-leading third pipe portion. Furthermore, in connection with the airlift pump is an air-conditioning pipe that extends above the water level and is connected at its lower portion to the vicinity of a curve between a first and second portion of the compressed-air pipe. The location of the lower portion of said air-conditioning pipe determines the lowest level to which the water level can be lowered by the airlift pump. Said water level is higher than the height at which the orifice of the first pipe is located, preventing the particles floating on the water level from entering the pipework of the airlift pump. This solution is not either capable of sufficiently preventing the entry of impurities into the pipework of the airlift pump. Accordingly, when the pump is used, solid matter particles can be discharged from the small-scale purifying plant along with the water that is pumped out.

### BRIEF DESCRIPTION OF THE INVENTION

The object of the present invention is to provide an improved method of pumping wastewater and a wastewater pump as compared with previous solutions.

The method of the invention is characterized by pumping the contents of the pipework of the airlift pump into the tank before discharge pumping.

The wastewater pump of the invention is further characterized in that the airlift pump comprises means for pumping the contents of the pipework of the airlift pump into the tank before the liquid discharge pumping.

The essential idea of the invention is that the contents of the pipework of the airlift pump are pumped into the tank before wastewater is pumped out. This significantly reduces the amount of wastewater emissions from the purifying plant, since the waste entered into the pipework of the pump is not pumped out of the wastewater tank. If discharge pumping exists from the wastewater processing system to for instance a filtering system, the risk of clogging of the pipes of the filtering system because of solid matter emissions is considerably reduced. The idea of an embodiment is that the pipework of the airlift pump is flushed back towards the tank, i.e. the airlift pump is started to pump the liquid therein towards the tank. The idea of a second embodiment is that a return pumping pipefitting is arranged in the pipework of the airlift pump, through which water is taken into the pipework from the wastewater tank in connection with the return flushing of the pipework of the airlift pump. This also ensures sufficient flow at the lowest curve of the pipework of the airlift pump. The return pumping pipefitting is arranged U-shaped such that both ends of its branches are approximately flush with the suction point of the pipework of the airlift pump. During discharge pumping, this substantially prevents pumping air from entering the pipe or pumped liquid being discharged from the pipe through the return pumping pipefitting.

### BRIEF DESCRIPTION OF THE FIGURES

The invention will be described in detail in the accompanying drawing, wherein
Figure 1 schematically shows a small-scale purifying plant, and
Figure 2 schematically shows another small-scale purifying plant.

### DETAILED DESCRIPTION OF THE INVENTION

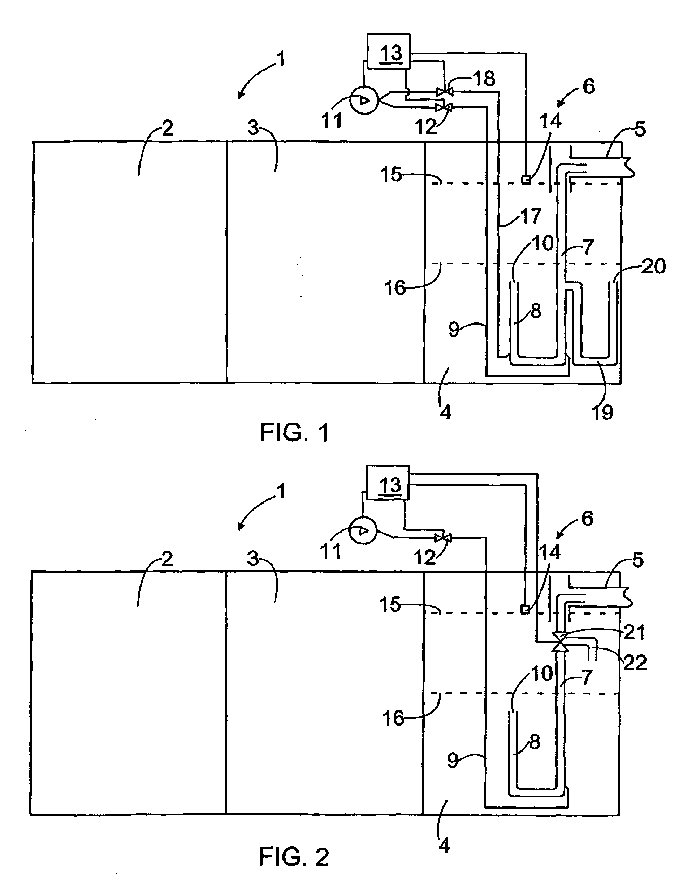

Figure 1 schematically shows a small-scale purifying plant 1 comprising a pre-sedimentation chamber 2, a sedimentation chamber 3 and a processing chamber 4. A discharge pipe 5 leads out of the processing chamber 4. Processed wastewater is pumped into the discharge pipe 5 with an airlift pump 6, i.e. a so-called mammoth pump located in the processing chamber 4. The small-scale purifying plant 1 naturally comprises an inlet pipe and connecting pipes or openings between the different chambers, a sludge return system from the processing chamber to the pre-sedimentation chamber, pumping rangements for pumping wastewater from the sedimentation chamber into the processing chamber, and means for dosing chemical coagulants. However, for the sake of clarity, these or any other solutions possibly related to a small-scale purifying plant, but not directly related to the airlift pump 6, are not shown in the attached figure.

The pipework of the airlift pump 6 comprises an upward-leading pipe portion 7 and a downward-leading pipe portion 8. When the processing chamber 4 is emptied with the airlift pump 6, pressurized air is led with a compressed-air pipe 9 to the lower portion of the upward-leading pipe portion 7. This makes the air mix with the liquid in the upward-leading pipe portion 7, said mixture of liquid and air rising upwards in the pipe, allowing liquid to be pumped out of the processing chamber 4 along the pipework of the airlift pump 6. The pipework of the airlift pump 6 absorbs more liquid through a suction opening 10.

Air is fed through the compressed-air pipe 9 from a pressurized air source. The pressurized air source may be an air compressor 11, for example. A first magnetic valve 12 whose operation is controlled with a control unit 13 is arranged in connection with the pressurized-air pipe 9. The operation of the air compressor 11 is also controlled with the control unit 13

When a level sensor 14 indicates that the liquid level in the processing chamber 4 has reached an upper level 15 for the liquid level, liquid purification processing is started. This purification processing may include e.g. aeration and feed of purification chemicals. After the liquid purification processing, the processing chamber 4 is emptied such that the liquid level sinks from the upper level 15 to a lower level 16.

Liquid is pumped with the airlift pump 6. Pumping liquid with the airlift pump 6 is stopped such that the liquid level sinks to the lower level 16 of the liquid level. This is most preferably implemented by determining the volume of the amount of liquid to be pumped out, once the dimensions of the processing chamber 4, and the upper limit 15 and the lower limit 16 of the liquid level are known. If the pumping efficiency of the airlift pump 6 is also known, the time during which the airlift pump 6 pumps a suitable amount of liquid can be determined such that the liquid level sinks from the upper limit 15 of the liquid level to the lower limit 16 of the liquid level. In other words, the control unit 13 controls air to flow along the compressed-air pipe 9 during the required period of time. The amount of liquid pumped out is typically in the range of 150 to 400 litres. The lower limit 16 of the liquid level is preferably arranged higher than the height of the suction opening 10, preventing any impurities floating on the surface from entering the pipework of the airlift pump 6.

The airlift pump 6 further comprises a second pressurized-air pipe 17 arranged to feed air to the lower portion of the downward-leading pipe portion 8. A second magnetic valve 18, also controlled with the control unit 13, is provided in connection with the second pressurized-air pipe 17. Accordingly, when the level sensor 14 communicates to the control unit 13 that the upper liquid level has reached the upper limit 15 of the liquid level, pressurized air is first led to the lower portion of the downward-leading pipe portion 8. This makes the air mix with the liquid inside the downward-leading pipe portion 8, and said mixture of liquid and air rises upwards in the downward-leading pipe portion 8 and is discharged through the suction opening 10. This, again, causes a flow in the pipework of the airlift pump 6 that empties the pipework of the airlift pump 6 into the processing chamber 4. Accordingly, any impurities in the pipework of the airlift pump 6 are flushed back to the processing chamber 4. Not until after this return flushing is the feed of pressurized air to the lower portion of the downward-leading pipe portion 8 interrupted, and air starts to be led to the lower portion of the upward-leading pipe portion 7, the liquid discharge pumping thus being initiated. This being so, due to the return flushing, the liquid pumped out does not substantially contain impurities, all liquid pumped out being substantially purified wastewater. During the return flushing, liquid has to be pumped only to the degree that the contents of the pipework are flushed clean into the chamber. The amount pumped is typically at most some litres, at maximum typically about five litres, i.e. the amount is quite small compared with the amount of liquid pumped out.

A return pumping pipefitting 19 can be arranged in connection with the upward-leading pipe portion 7. The return pumping pipefitting 19 serves to lead liquid into the pipework of the airlift pump 6 during return flushing, allowing a sufficient flow in the pipes of the airlift pump 6 to be ensured in connection with the return flushing. Accordingly, in connection with the return flushing, the liquid flows in the processing chamber 4 from a suction opening 20 in the return pumping pipefitting 19 through the return pumping pipefitting 19, the lower part of the upward-leading pipe portion 7, and the downward-leading pipe portion 8 out of the suction opening 10.

The return pumping pipefitting 19 is preferably arranged U-shaped such that the connection of the return pumping pipefitting 19 to the upward-leading pipe portion 7 is arranged flush with the suction opening 10 of the downward-leading pipe portion 8. Furthermore, the suction opening 20 of the return pumping pipefitting 19 is arranged flush with the suction opening 10 of the downward-leading pipe portion 8. Furthermore, the curve of the lower portion of the return pumping pipefitting 19 is arranged flush with the curve between the downward-leading pipe portion 8 and the upward-leading pipe portion 7. During discharge pumping, the ejector effect caused by the upwards flowing liquid and air may result in liquid flowing also through the return pumping pipefitting 19. However, this has no harmful effect, since the suction openings 10 and 20 are substantially flush with one another.

Figure 2 also schematically shows a small-scale purifying plant 1. The structure of Figure 2 differs from the solution of Figure 1 only as regards the structures of the airlift pump 6. In the solution of Figure 2, a valve 21 is arranged in connection with the pipe leading out of the chamber of the airlift pump 6. The valve 21 serves to guide the liquid, pumped with the pump 6, either to the discharge pipe 5 of the processing chamber 4 or back to the processing chamber 4 along a return pipe 22. In the case of Figure 2, the valve 21 is controlled to guide the liquid along the return pipe 22 back to the processing chamber 4 before the liquid is pumped out. In other words, the contents of the pipework of the airlift pump are fi rst emptied back to the processing tank, and are not pumped out of the processing chamber 4. The valve 21 is then controlled to guide the liquid to be pumped out through the discharge pipe 5. The amount of liquid to be returned into the chamber along the return pipe 22 before discharge pumping is also quite small compared with the amount of liquid to be pumped out. The prevention of impurities inside the pipework from exiting the chamber typically requires that only a few litres, at maximum for instance five litres, be pumped through the return pipe 22.

The drawing and the related description are only intended to illustrate the inventive idea. The details of the invention may vary within the scope of the claims. Accordingly, the liquid pumped with the airlift pump 6 may be for instance purified wastewater, as shown in connection with the attached figures, or the liquid may be unprocessed or only partly processed wastewater. In this case, the airlift pump 6 may thus be arranged in connection with the sedimentation chamber or another chamber employed in connection with wastewater processing. Furthermore, if desired, the pipework of the airlift pump 6 may also comprise, not only the upward-leading pipe portion and the downward-leading pipe portion, but also an upward-leading pipe portion ranged at the front end of the downward-leading pipe portion, the suction opening of the pipework thus being arranged downwards.

## Claims

1. A method of pumping wastewater, the method comprising pumping wastewater from a tank with an airlift pump (6) by leading air to a lower portion of an upward-leading pipe portion (7) of the airlift pump (6), charac- **terized by** pumping the contents of the pipework of the airlift pump (6) into the tank before discharge pumping.

2. A method as claimed in claim 1, **characterized by** a valve (21) being arranged in connection with the upward-leading pipe portion (7) of the airlift pump (6), and a return pipe (22) being arranged in connection with the valve (21), the valve (21) being controlled to guide the liquid to flow from inside the pipework of the airlift pump (6) along the return pipe (22) into the tank before the discharge pumping.

3. A method as claimed in claim 1, **characterized by** flushing the contents of the pipework of the airlift pump (6) back into the tank before the discharge pumping.

4. A method as claimed in claim 3, **characterized by** the pipework of the airlift pump (6) being provided with a downward-leading pipe portion (8) before the upward-leading pipe portion (7), and the return flushing being implemented by leading pressurized air to the lower portion of the downward-leading pipe portion (8).

5. A method as claimed in claim 4, **characterized by** the airlift pump (6) being provided with a return pumping pipefitting (19) in connection with the upward-leading pipe portion (7), and liquid being sucked into the pipework of the airlift pump (6) through the return pumping pipefitting (19) in connection with the return flushing.

6. A wastewater pump, which is an airlift pump (6) comprising an upward-leading pipe portion (7), a downward-leading pipe portion (8), and means for feeding air to a lower portion of the upward-leading pipe portion (7) for achieving discharge pumping, the airlift pump (6) being intended to be arranged to pump liquid from a tank, **characterized in that** the airlift pump (6) comprises means for pumping the contents of the pipework of the airlift pump (6) into the tank before the liquid discharge pumping.

7. A wastewater pump as claimed in claim 6, **characterized in that** the wastewater pump comprises a valve (21) arranged in connection with the upward-leading pipe portion (7), a return pipe (22) arranged in connection with the valve (21), and means for controlling the valve (21) to guide the contents of the pipework of the airlift pump (6) along the return pipe (22) back into the tank before the liquid discharge pumping.

8. A wastewater pump as claimed in claim 6, **characterized in that** the airlift pump (6) comprises means for feeding air to the lower portion of the downward-leading pipe portion (8) to accomplish return flushing.

9. A wastewater pump as claimed in claim 8, **characterized in that** the airlift pump (6) comprises a return pumping pipefitting (19) arranged in connection with the upward-leading pipe portion (7) for leading liquid into the pipework of the airlift pump (6) during the return flushing.

10. A wastewater pump as claimed in claim 9, **character- ized** in that the return pumping pipefitting (19) is U-shaped.

11. A wastewater pump as claimed in claim 9 or 10, **charac-terized** in that the return pumping pipefitting (19) is connected to the upward-leading pipe portion (7) substantially flush with a suction opening (10) in the downward-leading pipe portion (8).

12. A wastewater pump as claimed in any one of claims 9 to 11, **characterized in that** a suction opening (20) in the return pumping pipefitting (19) is arranged substantially flush with the suction opening (10) of the downward-leading pipe portion (8).

## Patentansprüche

1. Verfahren zum Pumpen von Abwasser, mit dem Schritt des Pumpens von Abwasser aus einem Tank mittels einer Lufthebepumpe (6), indem Luft in einem unteren Teil eines aufwärtsführenden Rohrabschnitts (7) der Lufthebepumpe (6) eingeleitet wird,
**gekennzeichnet durch** das Pumpen des Inhalts der Verrohrung der Lufthebepumpe (6) in den Tank vor dem Auslasspumpen.

2. Verfahren nach Anspruch 1, **gekennzeichnet durch** ein Ventil (21), das in Verbindung mit dem aufwärtsführenden Rohrabschnitt (7) der Lufthebepumpe (6) angeordnet ist, und ein Rücklaufrohr (22), das in Verbindung mit dem Ventil (21) angeordnet ist, wobei das Ventil (21) zum Führen der Flüssigkeit dahingehend gesteuert wird, dass vor dem Auslasspumpen die Flüssigkeit vom Inneren der Verrohrung der Lufthebepumpe (6) her **durch** das Rücklaufrohr (22) in den Tank strömt.

3. Verfahren nach Anspruch 1, **gekennzeichnet durch** das Ausspülen des Inhalts der Verrohrung der Lufthebepumpe (6) zurück in den Tank vor dem Auslasspumpen.

4. Verfahren nach Anspruch 3, **dadurch gekennzeichnet, dass** die Verrohrung der Lufthebepumpe (6) mit einem vor dem aufwärtsführenden Rohrabschnitt (7) angeordneten abwärtsführenden Rohrabschnitt (8) versehen ist, und dass das rücklaufende Ausspülen durch Einleiten von Druckluft in den unteren Teil des abwärtsführenden Rohrabschnitts (8) durchgeführt wird.

5. Verfahren nach Anspruch 4, **dadurch gekennzeichnet, dass** die Lufthebepumpe (6) mit einem Rücklaufpump-Rohrfitting (19) versehen ist, das mit dem aufwärtsführenden Rohrabschnitt (7) verbunden ist, und dass in Verbindung mit dem rücklaufenden Ausspülen Flüssigkeit durch den Rücklaufpump-Rohrfitting (19) hindurch in die Verrohrung der Lufthebepumpe (6) gesaugt wird.

6. Abwasserpumpe, ausgebildet als Lufthebepumpe (6), mit einem aufwärtsführenden Rohrabschnitt (7), einem abwärtsführenden Rohrabschnitt (8) und einer Vorrichtung zum Zuführen von Luft zu einem unteren Teil des aufwärtsführenden Rohrabschnitts (7) zwecks Durchführens des Auslasspumpens, wobei die Lufthebepumpe (6) zur Anordnung derart vorgesehen ist, dass sie Flüssigkeit aus einem Tank pumpt, **dadurch gekennzeichnet, dass** die Lufthebepumpe (6) eine Vorrichtung aufweist, um vor dem Flüssigkeitsauslasspumpen den Inhalt der Verrohrung der Lufthebepumpe (6) in den Tank zu pumpen.

7. Abwasserpumpe nach Anspruch 6, **dadurch gekennzeichnet, dass** die Abwasserpumpe ein Ventil (21), das mit dem aufwärtsführenden Rohrabschnitt (7) verbunden ist, ein Rücklaufrohr (22), das in Verbindung mit dem Ventil (21) angeordnet ist, und eine Vorrichtung aufweist, um das Ventil (21) derart zu steuern, dass vor dem Flüssigkeitsauslasspumpen der Inhalt der Verrohrung der Lufthebepumpe (6) durch das Rücklaufrohr (22) zurück in den Tank geleitet wird.

8. Abwasserpumpe nach Anspruch 6, **dadurch gekennzeichnet, dass** die Lufthebepumpe (6) eine Vorrichtung zum Zuführen von Luft zu einem unteren Teil des abwärtsführenden Rohrabschnitts (8) zwecks Durchführens des rücklaufenden Ausspülens aufweist.

9. Abwasserpumpe nach Anspruch 8, **dadurch gekennzeichnet, dass** die Lufthebepumpe (6) einen Rücklaufpump-Rohrfitting (19) aufweist, der mit dem aufwärtsführenden Rohrabschnitt (7) verbunden ist, um während des rücklaufenden Ausspülens Flüssigkeit in die Verrohrung der Lufthebepumpe (6) zu leiten.

10. Abwasserpumpe nach Anspruch 9, **dadurch gekennzeichnet, dass** der Rücklaufpump-Rohrfitting (19) U-förmig ist.

11. Abwasserpumpe nach Anspruch 9 oder 10, **dadurch gekennzeichnet, dass** der Rücklaufpump-Rohrfitting (19) mit dem aufwärtsführenden Rohrabschnitt (7) im Wesentlichen bündig mit einer Saugöffnung (10) des abwärtsführenden Rohrabschnitts (8) verbunden ist.

12. Abwasserpumpe nach einem der Ansprüche 9 bis 11, **dadurch gekennzeichnet, dass** eine Saugöffnung (20) des Rücklaufpump-Rohrfittings (19) im Wesentlichen bündig mit der Saugöffnung (10) des abwärtsführenden Rohrabschnitts (8) angeordnet ist.

## Revendications

1. Procédé de refoulement d'eau usée, le procédé comprenant le refoulement d'eau usée d'un réservoir avec une pompe à émulsion d'air (6) en conduisant l'air jusqu'à une partie inférieure d'une partie de conduite orientée vers le haut (7) de la pompe à émulsion d'air (6), **caractérisé en ce qu'**il comprend une étape de refoulement du contenu des conduites de la pompe à émulsion d'air (6) dans le réservoir avant le pompage d'évacuation.

2. Procédé selon la revendication 1, **caractérisé en ce qu'**une vanne (21) est agencée en relation avec la partie de conduite orientée vers le haut (7) de la pompe à émulsion d'air (6), et **en ce qu'**une conduite de retour (22) est agencée en relation avec la vanne (21), la vanne (21) étant commandée pour guider le liquide afin qu'il s'écoule depuis l'intérieur des conduites de la pompe à émulsion d'air (6) le long de la conduite de retour (22) dans le réservoir avant le pompage d'évacuation.

3. Procédé selon la revendication 1, **caractérisé en ce que** le contenu des conduites de la pompe à émulsion d'air (6) est ramené par chasse dans le réservoir avant le pompage d'évacuation.

4. Procédé selon la revendication 3, **caractérisé en ce que** les conduites de la pompe à émulsion d'air (6) sont dotées d'une partie de conduite orientée vers le bas (8) avant la partie de conduite orientée vers le haut (7), et **en ce que** la chasse de retour est mise en oeuvre en conduisant l'air sous pression jusqu'à la partie inférieure de la partie de conduite orientée vers le bas (8).

5. Procédé selon la revendication 4, **caractérisé en ce que** la pompe à émulsion d'air (6) est dotée d'une tuyauterie de pompage de retour (19) reliée à la partie de conduite orientée vers le haut (7), et **en ce que** le liquide est aspiré dans les conduites de la pompe à émulsion d'air (6) à travers la tuyauterie de pompage de retour (19) en relation avec la chasse de retour.

6. Pompe à eau usée qui est une pompe à émulsion d'air (6) comprenant une partie de conduite orientée vers le haut (7), une partie de conduite orientée vers le bas (8), et des moyens pour amener l'air jusqu'à une partie inférieure de la partie de conduite orientée vers le haut (7) pour obtenir le pompage d'évacuation, la pompe à émulsion d'air (6) étant destinée à être agencée pour refouler le liquide depuis un réservoir, **caractérisée en ce que** la pompe à émulsion d'air (6) comprend des moyens pour refouler le contenu des conduites de la pompe à émulsion d'air (6) dans le réservoir avant le pompage d'évacuation de liquide.

7. Pompe à eau usée selon la revendication 6, **caractérisée en ce que** la pompe à eau usée comprend une vanne (21) agencée en relation avec la partie de conduite orientée vers le haut (7), une conduite de retour (22) agencée en relation avec la vanne (21), et des moyens pour commander la vanne (21) afin de guider le contenu des conduites de la pompe à émulsion d'air (6) le long de la conduite de retour (22) pour revernir dans le réservoir avant le pompage d'évacuation de liquide.

8. Pompe à eau usée selon la revendication 6, **caractérisée en ce que** la pompe à émulsion d'air (6) comprend des moyens pour amener l'air jusqu'à la partie inférieure de la partie de conduite orientée vers le bas (8) pour réaliser une chasse de retour.

9. Pompe à eau usée selon la revendication 8, **caractérisée en ce que** la pompe à émulsion d'air (6) comprend une tuyauterie de pompage de retour (19) agencée en relation avec la partie de conduite orientée vers le haut (7) afin de conduire le liquide dans les conduites de la pompe à émulsion d'air (6) pendant la chasse de retour.

10. Pompe à eau usée selon la revendication 9, **caractérisée en ce que** la tuyauterie de pompage de retour (19) a une forme en U.

11. Pompe à eau usée selon la revendication 9 ou 10, **caractérisée en ce que** la tuyauterie de pompage de retour (19) est raccordée à la partie de conduite orientée vers le haut (7) sensiblement en affleurement avec une ouverture d'aspiration (10) dans la partie de conduite orientée vers le bas (8).

12. Pompe à eau usée selon l'une quelconque des revendications 9 à 11, **caractérisée en ce qu'**une ouverture d'aspiration (20) dans la tuyauterie de pompage de retour (19) est agencée sensiblement en affleurement avec l'ouverture d'aspiration (10) de la partie de conduite orientée vers le bas (8).
